# FASCICULE DE BREVET EUROPEEN

(11) **EP 0 934 231 B1**
(45) Date de publication et mention de la délivrance du brevet: **23.08.2000**
(21) Numéro de dépôt: 97912261.1
(22) Date de dépôt: 27.10.1997
(51) Int. Cl.: C02F 1/28

(54) **PURIFICATION DE L'EAU AU MOYEN DE CYCLODEXTRINES**
REINIGUNG VOM WASSER MIT CYCLODEXTRINEN
PURIFICATION OF WATER WITH CYCLODEXTRINS

(30) Priorité: 28.10.1996 FR 9613126
(43) Date de publication de la demande: 11.08.1999
(73) Titulaire: COMMISSARIAT A L'ENERGIE ATOMIQUE, 75015 Paris (FR)
(72) Inventeur: PERLY, Bruno, F-78320 La Verrière (FR); BAUDIN, Cécile, F-75014 Paris (FR); GOSSELIN, Pascal, F-72542 Vallon-sur-Gee (FR)
(74) Mandataire: Des Termes, Monique
(86) Numéro de dépôt international: FR9701920
(87) Numéro de publication internationale: WO9818722

(56) Documents cités:
- US-A- 5 190 663

## Description

### Domaine technique

L'invention a pour objet un procédé de purification de l'eau en vue de séparer de celle-ci des substances organiques, notamment des substances malodorantes.

Elle s'applique en particulier à l'élimination de polluants naturels constitués par la (-)géosmine et le (+)2-méthyl-isobornéol.

Ces polluants sont des substances organiques produites par bioconversion de matières organiques, et ils sont connus pour être des polluants naturels de l'eau potable. Dans les usines de retraitement de l'eau, ce sont les principaux polluants olfactifs qui contribuent à haute dose à l'odeur et au goût de terre moisie de l'eau polluée. Ces substances répondent aux formules suivantes :

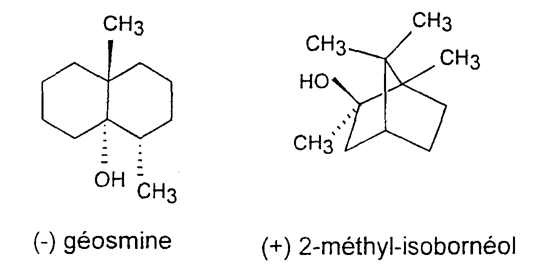

La (-)géosmine et le (+)2-méthyl-isobornéol sont détectés par l'odorat humain à très faible dose. Par exemple, la géosmine est détectée dans l'air à raison de 0,1 ppb.

### Etat de la technique antérieure

De nombreuses méthodes ont été testées pour éliminer ces deux polluants qui ne sont souvent présents qu'à des doses avoisinant 130 à 180 ng/l.
Les méthodes testées ont fait appel à des techniques d'adsorption, par exemple sur charbon actif, membrane lipidique, zéolite ou copolymère divinylbenzène-styrène, à des techniques de filtration sur sable ou gravier, à des processus de décomposition par oxydation au moyen d'ozone et/ou d'eau oxygénée, ou à l'élimination par des microorganismes.

Aucune de ces méthodes, utilisée seule, n'a été jugée pleinement satisfaisante. Aussi, on a envisagé plus récemment de combiner plusieurs techniques pour éliminer ces polluants.

Ainsi, Koizumi et al ont décrit dans Zosui Gijutsu, 18 (1), 56-60,1992 : Chemical abstract 117 (20), n° 198092g, un procédé pour éliminer totalement le 2-méthyl-isobornéol de l'eau par oxydation au moyen d'ozone et adsorption des produits d'oxydation par du charbon actif.

Vik et al ont décrit dans Water Sci. Technol, 20 (8-9), pages 229-36, 1988 : Chemical abstract 110 (10), n°82177q, un procédé pour éliminer la géosmine et le 2-méthyl-isobornéol de l'eau par oxydation au moyen d'ozone, suivie d'une adsorption sur du charbon actif.

Destailleur et al dans J. Fr. Hydrol., 22 (2), pages 225-34, 1991 : Chemical abstract 118 (6), n°45353p, ont décrit un procédé d'élimination de la géosmine de l'eau par oxydation au moyen d'ozone et d'eau oxygénée.

Le document US-A-5 190 663 décrit l'utilisation de cyclodextrines pour séparer des hydrocarbures aromatiques polynucléaires d'un milieu aqueux par inclusion dans ces cyclodextrines.

### Exposé de l'invention

La présente invention a pour objet un procédé de purification de l'eau qui permet d'éliminer des substances organiques malodorantes telles que la géosmine et le 2-méthyl-isobornéol, par une technique différente, facile à mettre en oeuvre et très efficace, utilisant une cyclodextrine capable de former un complexe d'inclusion avec ces substances.

Les cyclodextrines ou cyclomaltooligo-saccharides sont des composés d'origine naturelle formés par l'enchaînement d'unités glucose liées en α-1,4. De nombreux travaux ont montré que ces composés pouvaient former des complexes d'inclusion avec des molécules hydrophobes permettant ainsi leur solubilisation dans des milieux aqueux. De nombreuses applications ont été développées pour tirer profit de ce phénomène en particulier dans le domaine pharmaceutique. Ainsi, on a proposé dans JP-A-62/123196 l'utilisation du dérivé diméthylé de la β-cyclodextrine pour solubiliser la prednisolone. Dans WO-A-91/04026, on a proposé d'utiliser le dérivé diméthylé de la β-cyclodextrine pour solubiliser des agents pharmaceutiques tels que l'Amiodarone, le Melphalam et le Naproxen.

En revanche, l'utilisation de cyclodextrines pour piéger des polluants et purifier de l'eau n'a jamais été envisagée.

Selon l'invention, le procédé de purification de l'eau en vue de séparer de celle-ci au moins une substance organique, comprend les étapes consistant :
- à mettre en contact l'eau à purifier avec une cyclodextrine de formule : 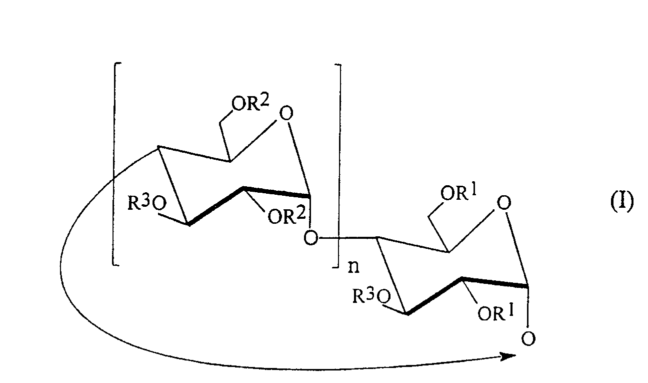 dans laquelle R¹ représente un groupe alkyle en C₁ à C₁₂ ou le groupe acétyle CH₃CO-, R² et R³ qui peuvent être identiques ou différents, représentent H ou R¹, R² et/ou R³ pouvant être différents des autres R² et R³ dans au moins une unité glucose de la cyclodextrine, et n = 5, 6 ou 7, pour inclure dans celle-ci la(les) substance(s) organique(s) à séparer, et
- à séparer l'eau purifiée de la cyclodextrine.

La cyclodextrine de formule (I) utilisée dans l'invention pour la purification de l'eau, peut être soit un dérivé disubstitué (R³ = H) de cyclodextrine naturelle, soit un dérivé trisubstitué (R³ ayant dans ce cas la même signification que R¹) de cyclodextrine naturelle. De plus, ces dérivés peuvent être di- ou tri- substitués sur une ou plusieurs unités glucose de la cyclodextrine et comporter des substituants différents dans au moins une unité glucose. De préférence, on utilise un dérivé de cyclodextrine, présentant les mêmes substitutions sur toutes les unités glucose.

Lorsque le groupe R¹ représente un groupe alkyle, il peut s'agir d'un groupe alkyle linéaire ou ramifié ayant de 1 à 12 atomes de carbone. De préférence, on utilise le groupe méthyle ou éthyle. Selon un mode préféré de réalisation de l'invention, le dérivé de cyclodextrine est le dérivé disubstitué, R² ayant la même signification que R¹ et R³ représentant un atome d'hydrogène.

Dans ce cas R¹ et R² sont par exemple le groupe méthyle.

On peut aussi obtenir de très bons résultats en utilisant des dérivés trisubstitués de cyclodextrine dans lesquelles R¹, R² et R³ ont la même signification et représentent de préférence le groupe méthyle.

L'utilisation des cyclodextrines de formule (I) pour la purification de l'eau présente de nombreux avantages.

En effet, les propriétés particulières des cyclodextrines permettent de séparer des substances organiques de l'eau par inclusion de ces substances dans la cavité hydrophobe des cyclodextrines sans qu'aucune liaison covalente ne s'établisse.

Le piégeage de ces substances polluantes est immédiat et total tant que le nombre de molécules de cyclodextrine est supérieure à celui des substances polluantes.

De plus, cette inclusion est irréversible et n'a pas de caractère destructif sur la molécule de cyclodextrine. De ce fait, le procédé de purification de l'eau est facile à mettre en oeuvre et peu coûteux, les cyclodextrines n'étant pas des matières premières onéreuses.

Par ailleurs, les complexes obtenus par inclusion de la substance polluante dans les dérivés de cyclodextrine sont plus solubles dans l'eau que ceux obtenus avec les cyclodextrines naturelles.

Les eaux qui peuvent êtres purifiées par le procédé de l'invention peuvent être des eaux potables, des eaux industrielles ou des effluents aqueux peu chargés en substances organiques de façon à permettre le piégeage total des substances polluantes malodorantes.

Selon une variante du procédé de l'invention, on utilise une cyclodextrine naturelle, c'est-à-dire répondant à la formule (I) donnée ci-dessus avec R¹=R²=R³=H, pour séparer une substance polluante choisie parmi la (-)géosmine et le (+)2-méthyl isobornéol.

De préférence, on utilise la β-cyclodextrine (n=6).

Les dérivés de cyclodextrine utilisables dans l'invention peuvent être préparés par des procédés classiques. Ainsi lorsque R¹ et R² représentent le même groupe alkyle et R³ représente H, le dérivé correspondant peut être obtenu selon le mode opératoire décrit dans Helvetica Chimica Acta, 61, (1978), page 2215. Lorsque R¹, R² et R³ représentent le même groupe alkyle, le dérivé peut être obtenu en faisant réagir NaH sur la cyclodextrine naturelle et en ajoutant l'iodure d'alkyle à l'alcoolate correspondant.

Lorsque le groupe R¹ est un groupe acétyle, on peut obtenir ces dérivés par réaction de la cyclodextrine naturelle correspondante avec l'anhydride acétique.

Pour utiliser la cyclodextrine de formule (I) pour la purification de l'eau, il est avantageux de fixer celle-ci de façon irréversible sur un support solide pour réaliser aisément la mise en contact de l'eau avec la cyclodextrine, puis sa séparation.

Ainsi, on peut mettre en oeuvre le procédé de l'invention dans une colonne de type chromatographique en faisant circuler l'eau à l'intérieur d'une colonne remplie d'un support inerte sur lequel est fixée la cyclodextrine de formule (I), et en recueillant l'eau purifiée à la sortie de cette colonne.

A titre d'exemple de supports solides utilisables, on peut citer la silice.

En effet, il existe plusieurs techniques pour fixer chimiquement les cyclodextrines sur la silice. Cette fixation peut être effectuée par l'intermédiaire d'un ou plusieurs bras espaceurs constitués par une chaîne hydrocarbonée contenant de 2 à 20 atomes de carbone et éventuellement des atomes d'oxygène intercalés entre les atomes de carbone. La liaison avec le support solide peut être effectuée à l'une des extrêmités du bras espaceur sous la forme de liaison covalente par l'intermédiaire de fonctions amide ou amine, ou par des liaisons ne contenant pas d'azote telles que des liaisons silane ; le bras espaceur peut être fixé chimiquement à son autre extrêmité sur l'un des groupes OR² de la cyclodextrine de formule (I) par une liaison éther, c'est-à-dire en remplaçant R² par le bras espaceur. Une technique de fixation sur la silice par liaisons ne contenant pas d'atome d'azote est décrite dans US-A-4 539 399. Des techniques de fixation utilisant des fonctions amide ou amine sont mentionnées dans l'ouvrage intitulé « New Trends in Cyclodextrins and Derivatives », Dominique Duchêne, Edition de Santé, 1991, page 520.

D'autres caractéristiques et avantages de l'invention apparaîtront mieux à la lecture de la description qui suit, d'exemples donnés bien entendu à titre illustratif et non limitatif, en référence aux dessins annexés.

### Brève description des dessins

La figure 1 est un spectre de résonance magnétique nucléaire du dérivé diméthylé de la β-cyclodextrine.

La figure 2 est un spectre de résonance magnétique nucléaire du dérivé diméthylé de la β-cyclodextrine en présence de géosmine.

### Exemple 1

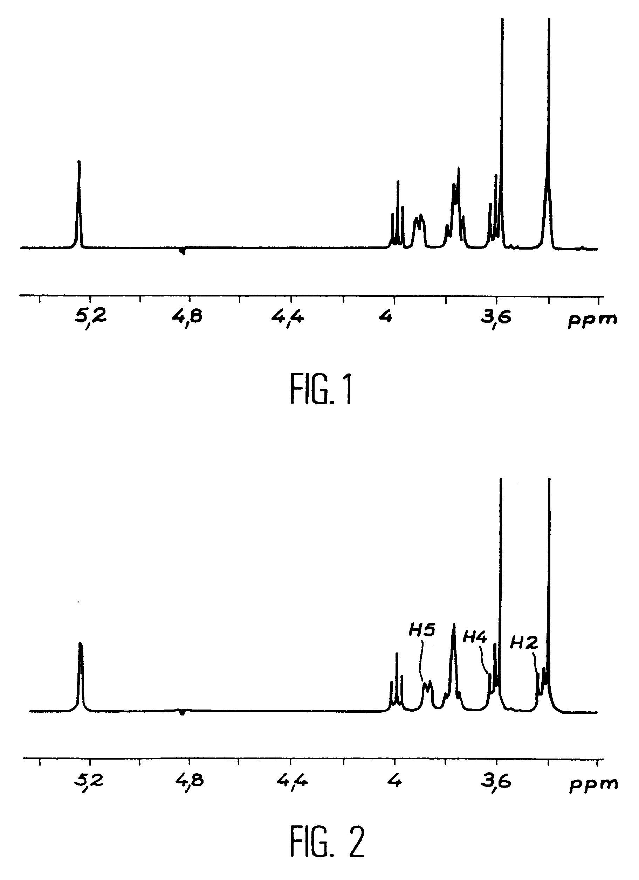

On dissout 7,98 mg du dérivé diméthylé de la β-cyclodextrine, c'est-à-dire le dérivé de formule (I) avec R¹ = R² = CH₃, R³ = H et n = 6, dans 0,4 ml d'eau deutérée afin d'obtenir une solution 15 mM. On analyse cette solution par résonance magnétique nucléaire RMN. Le spectre obtenu est représenté sur la figure 1.

On dissout ensuite 79,8 mg du même dérivé diméthylé de la la β-cyclodextrine dans 3,99 ml d'eau deutérée auxquels on ajoute 11 mg de (-)géosmine afin d'obtenir une solution équimoléculaire en chacun des deux composés (15 mM).

On soumet également cette solution à une analyse par résonance magnétique nucléaire.

Le spectre obtenu dans ces conditions est représenté sur la figure 2.

Si l'on compare les spectres des figures 1 et 2, on remarque que les modifications des déplacements chimiques correspondant au proton H₂, H₄ et H₅ montrent qu'il y a inclusion de la géosmine dans le dérivé diméthylé de la β-cyclodextrine.

### Exemple 2

On pèse 79,8 mg du dérivé diméthylé de la β-cyclodextrine utilisé dans l'exemple 1, et 10,1 mg de méthyl-isobornéol que l'on dissout dans de l'eau deutérée afin d'obtenir une solution équimoléculaire (15 mM) des deux composés.

On effectue une analyse par résonance magnétique nucléaire comme dans l'exemple 1.

Le spectre RMN obtenu dans ces conditions montre qu'il y a inclusion du méthyl-isobornéol dans le dérivé diméthylé de la β-cyclodextrine.

### Exemple 3

Dans cet exemple, on suit le même mode opératoire que dans l'exemple 1, mais on utilise 68,1 mg de β-cyclodextrine naturelle pour 4 ml d'eau deutérée.

Une comparaison des spectres RMN de la β-cyclodextrine naturelle en l'absence et en présence de 11 mg de géosmine ou de 10,1 mg de 2-méthyl-isobornéol montre qu'il y a inclusion de ces polluants dans la β-cyclodextrine.

### Exemple 4

Dans cet exemple, on suit le même mode opératoire que dans l'exemple 1, mais en utilisant 85,8 mg du dérivé perméthylé de la β-cyclodextrine (R¹ = R² = R³ = CH₃ et n = 6) pour 4 ml d'eau deutérée.

Une comparaison des spectres RMN pris en l'absence et en présence de 11 mg de géosmine ou de 10,1 mg de 2-méthyl-isobornéol montre qu'il y a . inclusion de ces polluants dans le dérivé perméthylé de la β-cyclodextrine.

### Exemple 5

Dans cet exemple, on suit le même mode opératoire que dans l'exemple 1, mais on utilise 73,5 mg du dérivé perméthylé de l'α-cyclodextrine (cyclodextrine de formule (I) avec R¹ = R² = R³ = CH₃ et n = 5) dans 4 ml d'eau deutérée.

Une comparaison des spectres RMN de ce dérivé en l'absence et en présence de 10 mg de géosmine ou de 10,1 mg de 2-méthyl-isobornéol montre qu'il y a inclusion de ces polluants.

### Exemple 6

Dans cet exemple, on suit le même mode opératoire que dans l'exemple 1, mais on utilise 97,98 mg du dérivé perméthylé de la γ-cyclodextrine (cyclodextrine de formule (I) avec R¹ = R² = R³ = CH₃ et n = 7) pour 4 ml d'eau deutérée.

Une comparaison des spectres RMN de ce composé en l'absence et en présence de 11 mg de géosmine ou de 10,1 mg de 2-méthyl-isobornéol montre qu'il y a inclusion de ces polluants.

### Exemple 7

Dans cet exemple, on réalise la purification d'une eau potable contenant des traces de (-)géosmine et de (+)2-méthyl-isobornéol sur une colonne remplie d'un gel de silice sur lequel est fixé le dérivé diméthylé de la β-cyclodextrine (cyclodextrine de formule (I) avec R¹ = R² = CH₃, R³ = H et n = 6).

Cette fixation est effectuée conformément à la technique décrite dans US-A-4 539 399 par l'intermédiaire d'un bras espaceur de formule : 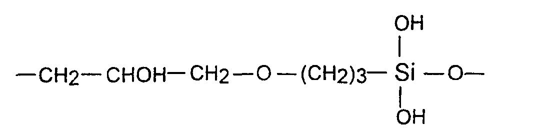 remplaçant l'un des R² de la cyclodextrine, les liaisons silane Si-O étant établies avec le gel de silice.

On obtient en sortie de colonne, une eau potable ne contenant plus de (-)géosmine et de (+)2-méthyl-isobornéol détectables par l'odorat humain.

## Revendications

1. Procédé de purification de l'eau en vue de séparer de celle-ci au moins une substance organique comprenant les étapes consistant :
- à mettre en contact l'eau à purifier avec une cyclodextrine de formule : 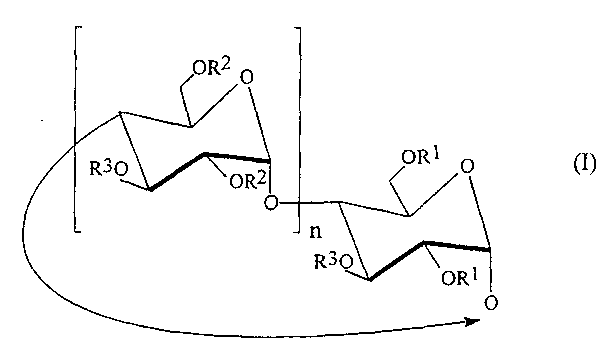 dans laquelle R¹ représente un groupe alkyle en C₁ à C₁₂ ou le groupe acétyle CH₃CO-, R² et R³ qui peuvent être identiques ou différents, représentent H ou R¹, R² et/ou R³ pouvant être différents des autres R² et R³ dans au moins une unité glucose de la cyclodextrine, et n = 5, 6 ou 7,
pour inclure dans celle-ci la(les) substance(s) organique(s) à séparer, et
- à séparer l'eau purifiée de la cyclodextrine.

2. Procédé selon la revendication 1, caractérisé en ce que la substance organique est une substance malodorante choisie parmi la (-)géosmine et le (+)2-méthyl-isobornéol.

3. Procédé selon l'une quelconque des revendications 1 et 2 caractérisé en ce que R¹ représente le groupe méthyle.

4. Procédé selon la revendication 3, caractérisé en ce que R² représente le groupe méthyle et R³ représente H.

5. Procédé selon l'une quelconque des revendications 1 et 2, caractérisé en ce que R¹, R² et R³ représentent le groupe méthyle.

6. Procédé de purification de l'eau en vue de séparer de celle-ci au moins une substance organique choisie parmi la (-)géosmine et le (+)2-méthyl isobornéol, comprenant les étapes consistant :
- à mettre en contact l'eau à purifier avec une cyclodextrine de formule : 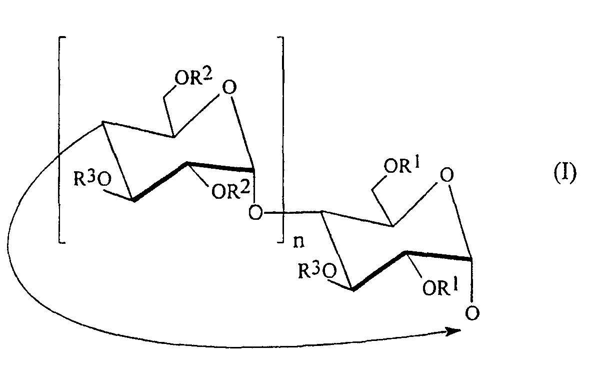 dans laquelle R¹, R² et R³ représentent un atome d'hydrogène et n = 5, 6 ou 7,
pour inclure dans celle-ci la(les) substance(s) organique(s) à séparer, et
- à séparer l'eau purifiée de la cyclodextrine.

7. Procédé selon l'une quelconque des revendications 1 à 6, caractérisé en ce que n = 6.

8. Procédé selon l'une quelconque des revendications 1 à 7, dans lequel la cyclodextrine de formule (I) est fixée de façon irréversible sur un support solide.

9. Procédé selon la revendication 8, caractérisé en ce que le support solide est la silice.

10. Procédé selon l'une quelconque des revendications 8 et 9, dans lequel la cyclodextrine est fixée sur le support solide par l'intermédiaire d'une chaîne hydrocarbonée de 2 à 20 atomes de carbone remplaçant l'un au moins des R2 de la cyclodextrine et liée par une liaison covalente au support solide.

11. Procédé selon l'une quelconque des revendications 8 à 10, dans lequel le support solide est disposé dans une colonne, et on fait circuler l'eau dans la colonne pour recueillir l'eau purifiée à la sortie de la colonne.

## Patentansprüche

1. Verfahren zur Reinigung des Wassers mit dem Ziel, von diesem mindestens eine organische Substanz abzutrennen, umfassend die Schritte, die darin bestehen:
- das zu reinigende Wasser in Kontakt zu bringen mit einem Cyclodextrin der Formel: 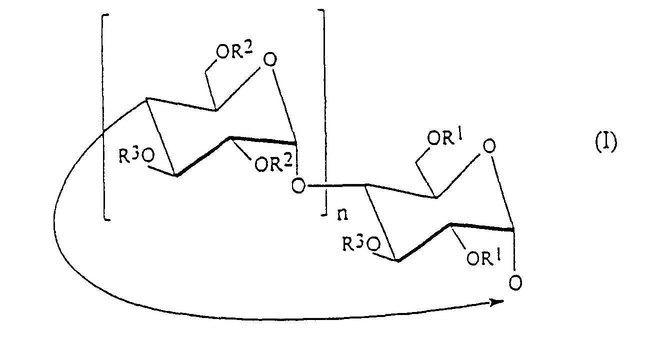 worin R¹ eine Alkylgruppe mit C₁ bis C₁₂ oder die Acetylgruppe CH₃CO- darstellt, R² und R³, die identisch oder verschieden sein können, H oder R¹ darstellen, wobei in mindestens einer Glucoseeinheit des Cyclodextrins R² und/oder R³ von den anderen R² und R³ verschieden sein können, und n = 5, 6 oder 7, um in diesem Cyclodextrin die abzutrennende(n) organische(n) Substanz(en) einzuschließen, und
- das gereinigte Wasser von dem Cyclodextrin zu trennen.

2. Verfahren nach Anspruch 1, dadurch gekennzeichnet, daß die organische Substanz eine unter (-)Geosmin und (+)2-Methyl-isoborneol gewählte übelriechende Substanz ist.

3. Verfahren nach einem der Ansprüche 1 und 2, dadurch gekennzeichnet, daß R¹ die Methylgruppe darstellt.

4. Verfahren nach Anspruch 3, dadurch gekennzeichnet, daß R² die Methylgruppe darstellt und R³ H darstellt.

5. Verfahren nach einem der Ansprüche 1 und 2, dadurch gekennzeichnet, daß R¹, R² und R³ die Methylgruppe darstellen.

6. Verfahren zur Reinigung des Wassers mit dem Ziel, es von mindestens einer unter (-)Geosmin und (+)2-Methyl-isoborneol gewählten organischen Substanz zu trennen, umfassend die Schritte, die darin bestehen:
- das zu reinigende Wasser in Kontakt zu bringen mit einem Cyclodextrin der Formel: 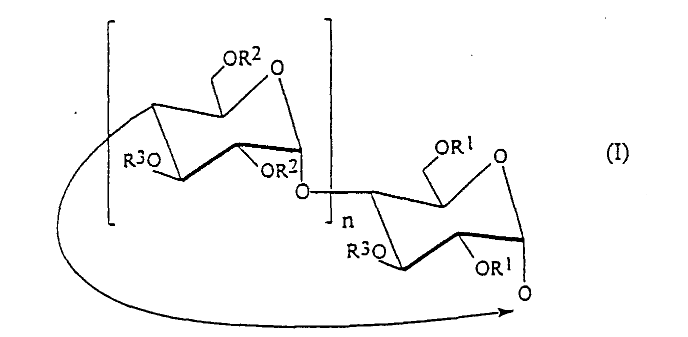 worin R¹, R² und R³ ein Wasserstoffatom darstellen und n = 5, 6 oder 7, um in diesem Cyclodextrin die abzutrennende(n) organischer) Substanz(en) einzuschließen, und
- das gereinigte Wasser von dem Cyclodextrin zu trennen.

7. Verfahren nach einem der Ansprüche 1 bis 6, dadurch gekennzeichnet, daß n = 6.

8. Verfahren nach einem der Ansprüche 1 bis 7, worin das Cyclodextrin der Formel (I) in irreversibler Weise auf einem festen Träger fixiert ist.

9. Verfahren nach Anspruch 8, dadurch gekennzeichnet, daß der feste Träger Siliciumdioxid ist.

10. Verfahren nach einem der Ansprüche 8 und 9, in welchem das Cyclodextrin auf dem festen Träger fixiert ist mittels einer Kohlenwasserstoffkette von 2 bis 20 Kohlenstoffatomen, die mindestens eines der R² des Cyclodextrins ersetzt und die durch eine kovalente Bindung an den festen Träger gebunden ist.

11. Verfahren nach einem der Ansprüche 8 bis 10, in welchem der feste Träger in einer Kolonne angeordnet ist und man das Wasser in der Kolonne umlaufen läßt, um das gereinigte Wasser am Ausgang der Kolonne abzunehmen.

## Claims

1. Process for the purification of water with a view to separating therefrom at least one organic substance and comprising the stages consisting of:
- contacting the water to be purified with a cyclodextrin of formula: 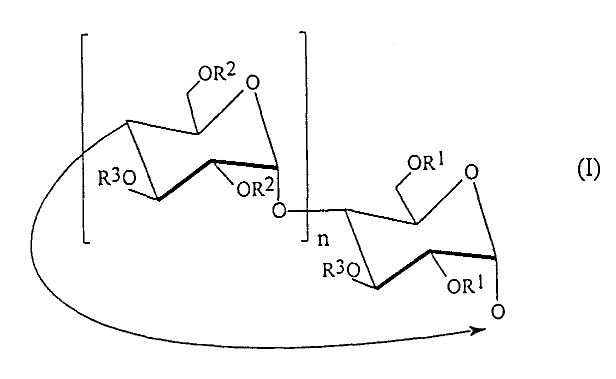 in which R¹ represents a C₁ to C₁₂ alkyl group or the acetyl group CH₃CO-, R² and R³, which can be the same or different, represent H or R¹, R² and/or R³ can differ from the other R² and R³ in at least one glucose unit of the cyclodextrin, and n = 5, 6 or 7,
for including in the latter the organic substance or substances to be separated and
- separating the purified water from the cyclodextrin.

2. Process according to claim 1, characterized in that the organic substance is a malodorous substance chosen from among (-)geosmine and (+)methyl-isoborneol.

3. Process according to either of the claims 1 and 2, characterized in that R¹ represents the methyl group.

4. Process according to claim 3, characterized in that R² represents the methyl group and R³ represents H.

5. Process according to either of the claims 1 and 2, characterized in that R¹, R² and R³ represent the methyl group.

6. Process for the purification of water with the view to the separation therefrom of at least one organic substance chosen from among (-)geosmine and (+)2-methyl-isoborneol, comprising stages consisting of:
- contacting the water to be purified with a cyclodextrin of formula: 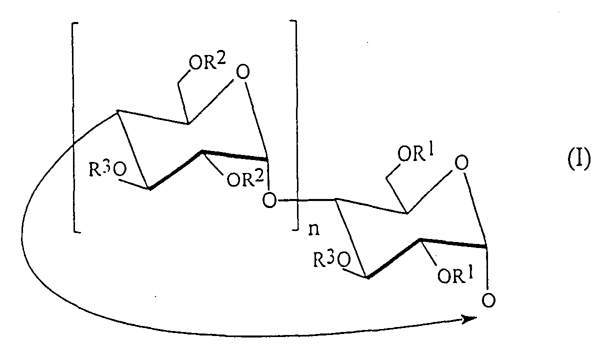 in which R¹, R² and R³ represent a hydrogen atom and n = 5, 6 or 7, in order to include therein the organic substance or substances to be separated and
- separating the purified water from the cyclodextrin.

7. Process according to any one of the claims 1 to 6, characterized in that n = 6.

8. Process according to any one of the claims 1 to 7, wherein the cyclodextrin of formula (I) is irreversibly fixed to a solid support.

9. Process according to claim 8, characterized in that the solid support is silica.

10. Process according to either of the claims 8 and 9, wherein the cyclodextrin is fixed to the solid support by means of a hydrocarbon chain with 2 to 20 carbon atoms replacing at least one of the R² of the cyclodextrin and bonded to the solid support by a covalent bond.

11. Process according to any one of the claims 8 to 10, wherein the solid support is placed in a column and the water is made to circulate in the column in order to collect the purified water at the column outlet.
